# EUROPÄISCHE PATENTSCHRIFT

(11) **EP 1 236 490 B1**
(45) Veröffentlichungstag und Bekanntmachung des Hinweises auf die Patenterteilung: **17.11.2004**
(21) Anmeldenummer: 02003306.4
(22) Anmeldetag: 13.02.2002
(51) Int. Cl.: B01D 29/11

(54) **Verfahren zur Herstellung einer Verbindung zwischen einem fluidundurchlässigen Kunststoff- und einem fluidurchlässigen Filtermaterial**
Process for the connection of a fluid tight synthetic material and a fluid permeable filtering material
Procédé de fabrication d'une jonction d'une matière artificielle impérméable pour un fluide à une matière filtrante perméable pour un fluide

(30) Priorität: 14.02.2001 DE 10106734
(43) Veröffentlichungstag der Anmeldung: 04.09.2002
(73) Patentinhaber: MAHLE Filtersysteme GmbH, 70376 Stuttgart (DE)
(72) Erfinder: Metzger, Peter, 71212 Renningen (DE); Ponce, Alfonso, 71034 Böblingen (DE); Schneider, Horst, 71336 Waiblingen (DE); Waibel, Hans, 71686 Remseck/Aldingen (DE)
(74) Vertreter: Patentanwalts-Partnerschaft, Rotermund + Pfusch + Bernhard

(56) Entgegenhaltungen:
- US-A- 5 846 421
- US-A- 5 904 846
- US-A- 6 096 212
- US-B1- 6 180 909

## Beschreibung

Die Erfindung betrifft ein Verfahren zur Herstellung einer festen, dichten Verbindung zwischen einem plattenförmig ausgebildeten fluidundurchlässigen, plastifizierbaren Kunststoffmaterial und nebeneinander liegenden Stirnkanten eines zick-zack-förmig gefalteten, flachen, insbesondere nicht plastifizierbaren, fluiddurchlässigen Filtermaterials mit den Merkmalen des einzigen Patentanspruchs b bis e.

Verfahren dieser Art sind in allgemeiner Form bekannt aus US-A-5 904 846, US-A-6 096 212 und US-A-5 846 421.

Aus US-B1-6 180 909 ist es darüber hinaus bereits bekannt, bei der Herstellung von Filtern die Fügepartner durch Erwärmung mittels Infrarotstrahlung zu verbinden.

Bei Filtern, insbesondere Ringfiltern, die im Stand der Technik nach einem Verfahren des vorliegenden einzigen Anspruchs mit den Merkmalen b bis e hergestellt werden, besteht insbesondere in der Kraftfahrzeugindustrie, in der äußerst hohe Stückzahlen solcher Filter produziert werden, der Zwang, die Produktionskosten in einem größtmöglichen Maße zu senken. Bei bekannten Verbindungen der vorgenannten Art wurde das insoweit mögliche Potential allerdings in Fällen, in denen das zu plastifizierende Kunststoffmaterial von farbiger bis insbesondere schwarzer Gestaltung sein soll, noch in keiner Weise ausgeschöpft. Insbesondere ein in schwarzer Farbe gestaltetes Polyamid als plastifizierbares Kunststoffmaterial wurde bisher in üblicher Weise mit Kohlenstoff-Pigmenten, speziell Ruß als kostengünstigem Farb- und Füllmittel eingefärbt. Eine farbige, insbesondere schwarze Farbe des Polyamid wird üblicherweise aus im wesentlichen ästhetischen Gründen gewählt, um die meist unregelmäßige Einlagerung des zick-zack-förmigen Filtermaterials in dem Polyamid von der gegenüberliegenden, das heißt außenliegenden Seite aus unsichtbar halten zu können.

Grundsätzlich wurden gerade bei einer stark farbigen Pigmentierung thermisch hochabsorptionsfähige Zusätze wie Ruß eingesetzt. Solche farbig pigmentierte Kunststoffe konnten bisher nicht mit einer an sich ohne weiteres erzeugbaren, hohen Strahlungsintensität behandelt werden. Dies war allgemein bekannt und wurde von der Fachwelt in dieser Form dennoch als praktisch naturgegeben hingenommen, das heißt die Fachwelt gab sich damit zufrieden, durch Anwendung einer niedrigeren Strahlungsintensität als an sich erzeugbar zu plastifizieren, obwohl niedrige Strahlungsintensitäten höhere Prozesszeiten für die Plastifizierung benötigen als höhere Intensitäten.

Hiervon ausgehend beschäftigt sich die Erfindung mit dem Problem, diesen Zustand, das heißt relativ lange Plastifizierzeiten bei farbig bis schwarz gestaltetem Polyamid, nicht einfach hinzunehmen, sondern nach einem Weg oder einer Möglichkeit zu suchen, die durch hohe Strahlungsintensitäten an sich möglichen, kurzen Plastifizier-Prozesszeiten auch tatsächlich realisieren zu können.

Eine Lösung dieses Problems konnte darin gefunden werden, als Pigmente, die dem zu plastifizierenden Polyamid für eine farbige bis schwarze Gestaltung beigemischt werden müssen, solche einzusetzen, die keine hohe thermische Absorption zulassen. Hierdurch erfolgt auch bei der Anwendung einer hohen Strahlungsintensität nach dem Merkmal f des Patentanspruchs während des Plastifizierprozesses in überraschender Weise keine bisher als bei einer solchen Behandlung unvermeidlich angesehene Materialzerstörung. Solche Materialzerstörungen eraten bisher in der Form sogenannter "HOT-SPOTS" auf.

Durch die erfinderische Lösung ist es erstmals und in überraschender Weise möglich, auch bei einem Einsatz von Pigmenten für eine farbige bis schwarze Gestaltung des Polyamids die Betrahlungs-Flächenleistung gemäß dem Merkmal f des Patentanspruchs problemlos derart anzuheben, dass insgesamt bei gleichbleibender bis besserer Verbindungsqualität eine bisher nicht zu erwartende zeitliche Verkürzung des Verbindungsprozesses erreicht werden kann. Die dadurch bei einer Großserienproduktion durch die Prozesszeitverkürzung gewonnene Ersparnis überwiegt bei weitem diejenige, die beispielsweise bei einer schwarzen Gestaltung des Polyamids durch einen Ersatz des besonders kostengünstigen Rußes als Pigmentmittel bisher erzielt wurde. Dieses von der Fachwelt nach dem vorbekannten Stand der Technik in keiner Weise zu erwartende Ergebnis wird erstmals überraschend gut mit der Erfindung erreicht.

Die Flächenleistung des Infrarotstrahlers kann bei besonders vorteilhaften Ausgestaltungen bis etwa 450 kW/m² erreichen.

Bei Verwendung eines beispielsweise Polyamidkunststoffes als 2,2 mm dicke Endscheibe eines Ringfilters wird die zum Plastifizieren des zu plastifizierenden Kunststoffbereiches erforderliche Aufwärmzeit durch das erfindungsgemäße Verfahren gegenüber einem mit einer Heizplatte arbeitenden Verfahren um etwa eine 10er Potenz verkürzt und zwar von etwa 50 s auf etwa 6 s. Darüber hinaus kühlt der aufgewärmte Kunststoffbereich nach Entfernen der Wärmequelle bei dem erfindungsgemäßen Verfahren wesentlich langsamer als bei einem mit einer Heizplatte arbeitenden Verfahren ab.

Das zu erwärmende Kunststoffmaterial darf keine Pigmente für beispielsweise eine farbige bis schwarze Gestaltung dieses Materials enthalten, die Wärme stark absorbieren können. Anderenfalls kann es bei dem erfindungsgemäß schnellen und intensiven Erwärmen innerhalb des Kunststoffes zu den Werkstoff zerstörenden exothermen Reaktionen kommen.

## Patentansprüche

1. Verfahren zur Herstellung einer festen, dichten Verbindung zwischen einem plattenförmig ausgebildeten, fluidundurchlässigen, plastifizierbaren Kunststoffmaterial und nebeneinanderliegenden Stirnkanten eines zick-zack-förmig gefalteten, flachen, insbesondere nicht plastifizierbaren, fluiddurchlässigen Filtermaterials
(a) mit einem Polyamid in farbiger bis schwarzer Gestaltung als plastifizierbarem Kunststoffmaterial, welches keine Pigmente für diese farbige bis schwarze Gestaltung enthält, die Wärme stark absorbieren können, bei dem
(b) in einem ersten Schritt das Kunststoffmaterial über einen geringen Bereich seiner Gesamttiefe durch eine in einem geringen Abstand gegenüber dem zu plastifizierenden Bereich vorgesehenen Wärmequelle plastifiziert wird,
(c) in einem zweiten Schritt die Wärmequelle entfernt,
(d) in einem dritten Schritt die Stirnkanten des Filtermaterials in den noch plastifiziert vorliegenden Bereich des Kunststoffmaterials eingedrückt werden und
(e) in einem vierten Schritt das eingedrückte Filtermaterial bis zur Ausbildung einer festen Verbindung mit dem Kunststoff in der Eindrückposition gehalten wird, und
(f) die Wärmequelle als ein Infrarotstrahler mit einem Strahlungsmaximum in einem Wellenlängenbereich zwischen 0,75 und 1,5 µm und einer Flächenleistung von mindestens 200 kW/m² ausgebildet ist.

## Claims

1. Method for producing a secure, tight connection between a sheet of plastifiable, liquid-impermeable plastic material and side-by-side end edges of a flat liquid-permeable filter material, especially not plastifiable, but folded in a zigzag pattern.
(a) with a polyamide in a colored black embodiment as a plastifiable plastic membrane which does not contain any pigments with a great absorption capacity for heat for this colored black embodiment, whereby
(b) in a first step the plastic material is plastified over a small area of its total depth by a heat source which is provided at a small distance from the area to be plastified,
(c) in a second step the heat source is removed,
(d) in a third step the end edges of the filter material are pressed into the area of the plastic material which is still plastified, and
(e) in a fourth step the filter material thus depressed is held in the depressed position until a tight connection to the plastic is formed, and
(f) the heat source is designed as an infrared lamp having a radiation maximum in a wavelength range between 0.75 µm and 1.5 µm and a power per unit of area of at least 200 kW/m^{2.}

## Revendications

1. Procédé de fabrication d'un assemblage fixe étanche entre un matériau en matière plastique plastifiable imperméable aux fluides, configuré en forme de plaque, et des bords frontaux juxtaposés d'un matériau filtrant plat perméable aux fluides plié en zigzag, en particulier non plastifiable,
(a) comportant un polyamide en configuration teintée à noire en tant que matériau en matière plastique plastifiable, qui ne renferme aucun pigment pour cette configuration teintée à noire pouvant absorber fortement la chaleur, dans lequel
(b) dans une première phase le matériau en matière plastique est plastifié sur une zone minime de sa profondeur totale par une source de chaleur prévue à une faible distance par rapport à la zone à plastifier,
(c) dans une deuxième phase la source de chaleur est retirée,
(d) dans une troisième phase les bords frontaux du matériau filtrant sont emmanchés dans la zone encore existante à l'état plastifié du matériau en matière plastique et
(e) dans une quatrième phase le matériau filtrant emmanché est maintenu dans cette position jusqu'à la réalisation d'un assemblage fixe avec la matière plastique, et
(f) la source de chaleur est configurée comme un radiateur infrarouge avec un maximum de rayonnement dans une plage de longueurs d'ondes comprise entre 0,75 et 1,5 µm et une puissance surfacique d'au moins 200 kW/m².
